# EUROPEAN PATENT SPECIFICATION

(11) **EP 0 398 999 B1**
(45) Date of publication and mention of the grant of the patent: **03.01.1996**
(21) Application number: 89908001.4
(22) Date of filing: 21.06.1989
(51) Int. Cl.: F16L 3/10

(54) **MODULAR CONDUIT SYSTEM**
MODULARES LEITUNGSSYSTEM
SYSTEME MODULAIRE DE CONDUITES

(30) Priority: 27.06.1988 US 211967
(43) Date of publication of application: 28.11.1990
(73) Proprietor: DAIGLE, Robert V., Pompano Beach, FL 33064 (US); GRICE, Gordon J., Janesville, WI 53545 (US)
(72) Inventor: DAIGLE, Robert V., Pompano Beach, FL 33064 (US); GRICE, Gordon J., Janesville, WI 53545 (US)
(74) Representative: Baillie, Iain Cameron
(86) International application number: PCT/US89/02728
(87) International publication number: WO 90/00235

(56) References cited:
- GB-A- 0 835 605
- GB-A- 1 403 714
- GB-A- 1 432 566
- GB-A- 2 099 103
- GB-A- 2 174 451
- US-A- 3 464 172
- US-A- 3 539 137
- US-A- 4 058 167
- US-A- 4 079 786
- US-A- 4 252 289
- US-A- 4 330 040
- US-A- 4 765 577
- US-A- 4 795 114

## Description

The present invention relates to a modular system and, more particularly, to a water pipe system which will provide a method of insulation of such piping.

There exists in the prior art and, particularly, in the context of piping systems having a utility in connection with fire extinguishing, structures which, to some degree, may be considered modular. This prior art comprises U.S. Patent No. 3,464,172 (1969) to McGee: No. 4,058,167 (1977) to Granek; No. 4,079,786 (1978) to Moling; and No. 4,330,040 (1982) to Ence.

British Published Specification No. 2174451A discloses a clip for supporting tubing according to the preamble of claim 1 and has a cover which in turn clips into complementary coupling located on the clip.

None of the above, or other, prior art known to the inventors discloses a modular waterpipe system in which insulation may be included within the mechanical structure of the pipe system and in which the piping is supported for example on the wall and ceiling from both the rear and front thereof. Accordingly, prior art modular waterpipe systems do not enjoy either the structural integrity nor the insulative protection against fire provided by the structure disclosed herein. Also, the components of systems shown in the prior art are not functional as a heat shield to the degree that the instant system is so functional.

The present invention consists completely of components which may be snap-fitted together in order to form a fluid-tight fit between all components thereof, thereby alleviating need for much of the laborious aspect associated with the installation of piping as has been known in the prior art.

It is to the above ends, and in response to the above described limitations in the prior art, that the present invention is directed.

More particularly, it is an object to the present invention to provide an improved modular waterpipe system by which installation of pipe, and heat shields therefore, upon the walls, ceiling, or intersections thereof, of a building may be more readily facilitated.

According to the present invention there is provided a modular conduit support system for securement of a conduit, comprising nesting means for receiving a conduit therein, transverse support means coupled with the nesting means for fixing the nesting means relative to a constructional surface, and a cover plate including coupling means thereon for fixing the cover plate relative to the support means, whereas the nesting means being resilient to have a partially open geometry for receiving therein a conduit proportioned for complemental coupling to said resilient nesting means, said back plate further comprising elongate first complemental coupling means extending in use outwardly from the edges thereof; and in that the cover plate is proportioned in cross-section to said back plate and has, along the edges thereof, outwardly extending elongate second complemental coupling means proportioned for complemental interlocking engagement with said elongate first complemental coupling means, whereby the modular conduit system is formed by locating said conduit in said nesting means and by mutually engaging said first and second complemental coupling means of said respective back and cover plates characterized in that the support means being transverse comprises two separate transverse offsets each comprising a back bracket having a back plate adapted for securement to a respective one of two transverse intersecting surfaces, the nesting means being fixed relative to each back bracket to have the partially open face geometry open in a direction opposite from said intersection between the intersecting surfaces.

There may be provided a modular pipe system of the above type in which insulation of the piping may be provided internally to the cross-sectional geometry of such a pipe system.

There may also be provided a waterpipe system in which a protective heat shield may be press fittably coupled over the pipe and about the insulation thereof.

Embodiments of the present invention will now be described by way of example with reference to the accompanying drawings in which:-

Fig. 1 is a radial cross-sectional view of the first embodiment of an inventive modular conduit system.

Fig. 2 is a longitudinal external view of the embodiment of Fig. 1.

Fig. 3 is a radial cross-sectional view of another modular pipe system.

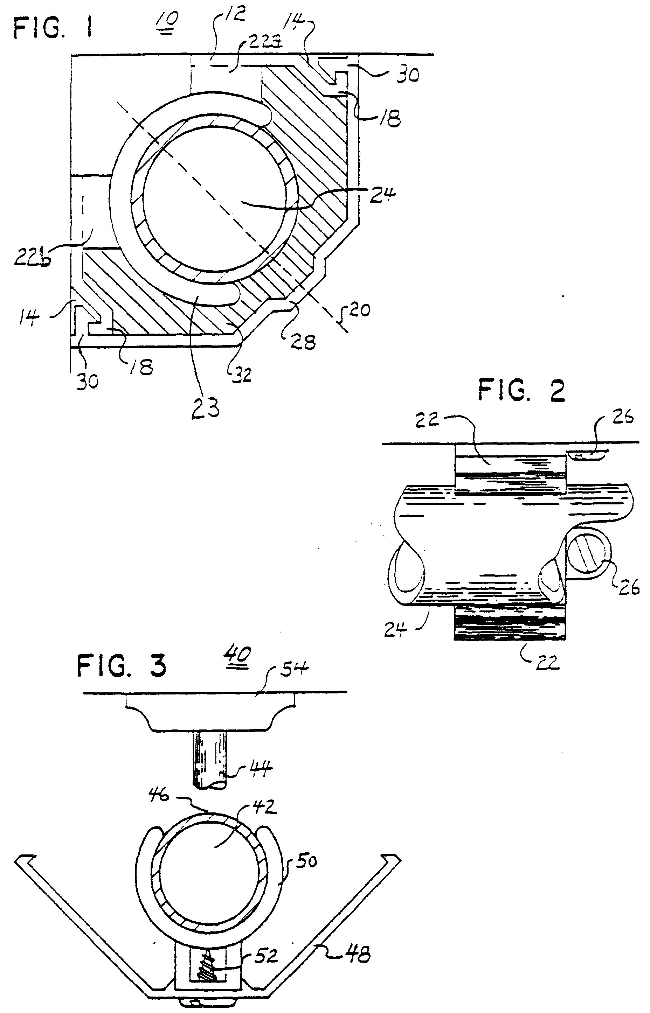

With reference to the cross-sectional view of Fig. 1, there is shown a first embodiment of the modular conduit system. Therein, there is shown positioned, at a region of intersection between a ceiling 10 and a wall 11, a back plate 12 the edges of such plate comprising longitudinal first complemental coupling means 14 which, in the embodiment of Fig. 1, take the form of a female snap-fit coupling, the walls of which are defined by a longitudinal lip element 18. As may be noted, back plate 12, as well as further elements described below, are symmetric about the axis of line 20 other than the nesting member into which the pipe or conduit fits. However, the nesting means may be located symmetrically about the axis 20.

As may be further noted, the interior of back plate 12 is provided with an integral nesting element 22, the function of which are to receive a conduit 24 in snap-fit relationship therewith. Accordingly, the present system, in operation, involves, as a first step, the securement of back plate 12, to (in the illustrated method of use of Fig. 1) ceiling 10 and wall 11 as, for example, by either screw means 26 (as shown in Fig. 2) or in a given application, by other securement means such as glue or adhesive.

Thereafter, as a second step, conduit 24 is snap-fitted into nesting element 22 of back plate 12.

Thereafter, a front plate (also alternately termed a heat shield) 28, having on the edges thereof longitudinal second complemental coupling means 30, is snap-fitted onto the longitudinal lip element 18 of first complemental coupling means 14. Accordingly, as may be appreciated in the radial cross-sectional view of Fig. 1, the second complemental coupling means 30 of the front plate 28 is proportioned for snap-fit engagement with the first complemental coupling means 14 of back plate 12, such that the front plate may be readily attached to the back plate 12, thereby enclosing the conduit 24 without need for the use of costly bracketing, gluing or the like.

A further advantage of the above described modular pipe system is that insulation 32 may be placed in the area indicated by the shading in Fig. 1. Accordingly, the conduit 24 may be protected by materials such as shredded fiberglass insulating material and, as well, by front plate 28 which, in many applications, will be formed of a high fire-resistant material 32 such as a G.E. mineral-filled NORYL (Registered Trade Mark) Accordingly, there is achieved a conduit system which is stable and which may be readily services by the simple snap removal of front plate 28 from back plate 12 and, if necessary, the snap removal of conduit 24 from nesting element 22 of back plate 12.

The above described system is particularly useful where the installation of fire sprinklers or nozzles is contemplated, in that such nozzles or sprinklers may be easily installed within a pipe system that may be readily assembled and disassembled in accordance with the principles of the embodiment described above.

With reference to Fig. 3, there is shown another modular conduit support system in which there is suspended from a ceiling 40 a conduit or pipe 42. This is achieved through the use of pipe hanger 44 which depends from ceiling 40 and thereby holds pipe 42 at point 46.

As a separate assembly, there is provided a front plate 48 and a nesting element 50. As may be noted in Fig. 3, nesting element 50 is secured to the front plate by a scraw 52. Further, nesting element 50 is proportioned for the snap-fit engagement of pipe 42.

A system of Fig. 3, it is to be appreciated that pipe hanger 44 may be considerably reduced in dimension where it is desired to position pipe 42 closer to ceiling 40. Also, in the manner shown in Fig. 3 of U.S. Patent No. 4,079,786 to Moling, the embodiment of Fig. 3 may be positioned vertically at the intersection of two walls. Therein, the pipe hanger 44 would be adapted at an interface area 54 with the surface geometry of the intersection of the walls. In the system of Fig 3. insulation may, as is the case in the embodiments of Figs. 1 and 2, be placed within the internal cross-sectional geometry between bracket 50 and front plate 48, thereby providing protection to pipe 42. Similarly, a front plate 48 will be made of a highly fire-resistant material. Also, as is the case in the embodiment of Figs. 1 and 2, pipe 42 is supported both from the back and front thereby providing the modular system thereof with enhanced stability.

Therefore there has been described a modular conduit support system which provides ease of assembly and disassembly, both for purposes of installation and for future servicing of the system.

## Claims

1. A modular conduit support system for securement of a conduit (24), comprising nesting means (23) for receiving a conduit (24) therein, transverse support means (22a,22b) coupled with the nesting means (23) for fixing the nesting means (23) relative to a constructional surface (10,11), and a cover plate (28) including coupling means (14,30) thereon for fixing the cover plate (28) relative to the support means (22a, 22b), whereas the nesting means being resilient to have a partially open geometry for receiving therein a conduit (24) proportioned for complemental coupling to said resilient nesting means (23), said back plate (12) further comprising elongate first complemental coupling means (14) extending in use outwardly from the edges thereof; and in that the cover plate (28) is proportioned in cross-section to said back plate and has, along the edges thereof, outwardly extending elongate second complemental coupling means (30) proportioned for complemental interlocking engagement with said elongate first complemental coupling means (14), whereby the modular conduit system is formed by locating said conduit in said nesting means (23) and by mutually engaging said first and second complemental coupling means (14,30) of said respective back and cover plates (12,98) characterized in that the support means (22a, 22b) being transverse comprises two separate transverse offsets each comprising a back bracket having a back plate (12) adapted for securement to a respective one of two transverse intersecting surfaces, the nesting means (23) being fixed relative to each back bracket to have the partially open face geometry open in a direction opposite from said intersection between the intersecting surfaces.

2. A system as claimed in claim 1, characterised in that said complemental coupling of said conduit to said coupling (24) comprises a snap-fit coupling; and said mating engagement between said front plate and said back plate comprises a snap-fit engagement.

3. A system as claimed in claim 1, characterised in that shredded fibreglass insulating material is packed in the free space between the inner surface of the cover plate (48) for said constructional surface and the exterior of said pipe (42).

## Patentansprüche

1. Modulares Leitungshalterungssystem zur Befestigung einer Leitung (24), umfassend eine Aufnahmeeinrichtung (23) zur Aufnahme einer Leitung (24), eine querverlaufende Halteeinrichtung (22a, 22b), die mit der Aufnahmeeinrichtung (23) gekoppelt ist, um die Aufnahmeeinrichtung (23) an einer Montagefläche (10, 11) zu befestigen, und eine Abdeckplatte (28) mit einer Kopplungseinrichtung (14, 30) daran, um die Abdeckplatte (28) an der Halteeinrichtung (22a, 22b) zu befestigen, wobei die Aufnahmeeinrichtung elastisch ist, so daß sie eine teilweise offene Geometrie besitzt, um darin eine Leitung (24) aufzunehmen, die so ausgelegt ist, daß sie komplementär mit der elastischen Aufnahmeeinrichtung (23) gekoppelt werden kann, wobei die hintere Platte (12) des weiteren eine langgestreckte erste komplementäre Kopplungseinrichtung (14) umfaßt, die sich im Gebrauch von ihren Kanten nach außen erstreckt; und daß die Abdeckplatte (28) im Querschnitt der hinteren Platte entspricht und längs ihrer Kanten eine nach außen ragende langgestreckte zweite komplementäre Kopplungseinrichtung (30) aufweist, die so ausgelegt ist, daß sie in die langgestreckte erste komplementäre Kopplungseinrichtung (14) eingreift, so daß das modulare Leitungssystem hergestellt wird, indem die Leitung in der Aufnahmeeinrichtung (23) angeordnet wird, und indem die erste und die zweite komplementäre Kopplungseinrichtung (14, 30) der hinteren Platte bzw. der Abdeckplatte (12, 28) ineinandergreifen, dadurch gekennzeichnet, daß die querverlaufende Halteeinrichtung (22a, 22b) zwei getrennte querverlaufende Vorsprünge aufweist, die jeweils einen hinteren Tragarm mit einer hinteren Platte (12) umfassen, die jeweils an einer der beiden querverlaufenden sich kreuzenden Flächen befestigt werden kann, wobei die Aufnahmeeinrichtung (23) an jedem hinteren Tragarm befestigt ist, so daß die teilweise offene Geometrie in einer Richtung offen ist, die dem Schnittpunkt der sich kreuzenden Flächen entgegengesetzt ist.

2. System nach Anspruch 1, dadurch gekennzeichnet, daß die komplementäre Kopplung der Leitung mit der Leitung (24) eine Schnappverbindung umfaßt; und daß der Eingriff zwischen der vorderen Platte und der hinteren Platte eine Schnappverbindung darstellt.

3. System nach Anspruch 1, dadurch gekennzeichnet, daß Isoliermaterial aus zerkleinerter Glasfaser in den freien Raum zwischen der Innenseite der Abdeckplatte (48) der Montagefläche und der Außenseite des Rohres (42) gepackt ist.

## Revendications

1. Système modulaire de support de conduites pour la fixation d'une conduite (24), comprenant un moyen d'emboîtement (23) qui reçoit une conduite (24), des moyens de support transversaux (22a, 22b) accouplés au moyen d'emboîtement (23) pour fixer le moyen d'emboîtement (23) par rapport à une surface de construction (10, 11) et une plaque de couverture (28) comportant des moyens d'assemblage (14, 30) pour fixer la plaque de couverture (28) par rapport aux moyens de support (22a, 22b), tandis que le moyen d'emboîtement est élastique et présente une géométrie en partie ouverte pour recevoir une conduite (24) d'un calibre permettant l'assemblage complémentaire audit moyen d'emboîtement élastique (23), ladite plaque arrière (12) comprenant en outre des premiers moyens allongés d'assemblage complémentaire (14) s'étendant en service vers l'extérieur depuis ses bords et la plaque de couverture (28) étant proportionnée en coupe transversale conformément à ladite plaque arrière et comportant, le long de ses bords, des deuxièmes moyens allongés d'assemblage complémentaire, s'étendant vers l'extérieur (30) qui sont dimensionnés en vue d'un engagement complémentaire de verrouillage avec lesdits premiers moyens d'assemblage complémentaire (14), de sorte que le système modulaire de conduites est formé en plaçant ladite conduite dans ledit moyen d'emboîtement (23) et en engageant mutuellement lesdits premiers et deuxièmes moyens d'assemblage complémentaire (14, 30) desdites plaques arrière et de couverture (12, 28), respectivement, caractérisé en ce que les moyens de support transversaux (22a, 22b) comprennent deux décalages transversaux séparés comprenant chacun un support arrière comportant une plaque arrière (12) à même d'être fixée à l'une des deux surfaces respectives transversales qui s'intersectent, le moyen d'emboîtement (23) étant fixé par rapport à chaque support arrière afin de présenter sa géométrie de face en partie ouverte, de manière qu'elle s'ouvre dans une direction opposée à ladite intersection entre les surfaces qui s'intersectent.

2. Système suivant la revendication 1, caractérisé en ce que ledit assemblage complémentaire de ladite conduite audit moyen d'emboîtement (23) comprend un assemblage à enclenchement élastique; et ledit engagement d'assemblage entre ladite plaque avant et ladite plaque arrière comprend un engagement à enclenchement élastique.

3. Système suivant la revendication 1, caractérisé en ce que l'espace libre situé entre la surface intérieure de la plaque de couverture (48) pour ladite surface de construction et l'extérieur dudit tuyau (42) est rempli de matière isolante en fibres de verre déchiquetées.
